# EUROPEAN PATENT SPECIFICATION

(11) **EP 4 009 195 B1**
(45) Date of publication and mention of the grant of the patent: **30.04.2025**
(21) Application number: 20306472.0
(22) Date of filing: 01.12.2020
(51) Int. Cl.: G06F 16/51, G06F 16/55, G06F 16/53, G06N 20/00

(54) **METHOD FOR STORING INFORMATION WITH INDEXED IMAGE FIELDS AND METHOD FOR RETRIEVING THE SAME**
VERFAHREN ZUM SPEICHERN VON INFORMATIONEN MIT INDEXIERTEN BILDFELDERN UND VERFAHREN ZUM WIEDERAUFFINDEN DERSELBEN
PROCÉDÉ DE STOCKAGE D'INFORMATIONS COMPORTANT DES CHAMPS D'IMAGE INDEXÉS ET PROCÉDÉ DE RÉCUPÉRATION DE CES INFORMATIONS

(43) Date of publication of application: 08.06.2022
(73) Proprietor: Airbus Defence and Space SAS, 31402 Toulouse Cedex 4 (FR)
(72) Inventor: MARRAUD, Denis, 78997 ELANCOURT (FR); TANNIER, Yannis, 78997 ELANCOURT (FR)
(74) Representative: Cabinet Le Guen Maillet

(56) References cited:
- US-A1- 2017 357 896
- US-A1- 2020 027 002
- US-A1- 2020 104 721
- US-A1- 2020 342 328

## Description

### TECHNICAL FIELD

The present invention generally relates to indexing images, such as satellite images, in a database or knowledge base, and retrieving information stored therein using indexing.

### RELATED ART

Monitoring images, which are for example acquired by Earth observation satellites, constitutes a significant source of information in many fields (defense, intelligence, maritime surveillance, or monitoring of urbanization, deforestation, forest fires, agriculture, geographical zones after a natural disaster...). In a context where the capacities of revisiting images and images' resolution are constantly increasing, it is crucial to provide analysts who use these images with tools assisting in retrieving, filtering and exploiting information from said images.

In order to enable allocating more time to analytical tasks with high added value than to time-consuming information retrieval tasks, a commonly adopted approach is to automatically derive semantic information from the satellite images and use that semantic information to focus analysts' attention on content relevant to images associated with semantic information matching keywords representative of the analysts' area of application.

The semantic information may be automatically obtained from detectors of objects (e.g., vehicles, vessels, planes), of infrastructures (e.g., particular buildings, crossroads...) or of changes (e.g., new road, deforestation, flood...), classifiers of vignettes (e.g., classification in various classes such as urban / rural / water / high vegetation / low vegetation...), or even segmentors (attribution of a class to each pixel of the image). While these approaches make it possible to limit the amount of data to be presented to the analysts, they however have the following drawbacks.

First of all, they generally rely on supervised learning approaches that require not only large annotated datasets for each class to be supported during classification, but also balanced datasets (same order of magnitude of learning samples per class): for some points of interest difficult to observe, or for fine grained classification (e.g., identification), it may be practically impossible to constitute a sufficiently large dataset to enable effective deep learning. One way to deal with this issue is to artificially complete the dataset using images specifically created for that purpose (e.g., image synthesis techniques...), with however limited efficiency due to the domain gap between synthesis and reality.

Moreover, they are limited to the classes / types of objects for which they have been trained, which renders difficult afterwards extensions to other classes or types of objects. Indeed, for any new point of interest (class, object...), a new dataset representative thereof shall be formed and a whole learning process shall be restarted.

Deep learning is a cumbersome and time-consuming process, which still requires tight supervision from data science experts to reach efficiency.

US 2017/357896 A1 relates to creating content embeddings using deep metric machine learning algorithms in the form of neural networks, and in particular relates to using convolutional neural networks for populating an embedding space of data that can be used for performing various types of searching.

It is thus desirable to overcome the foregoing drawbacks of the prior art, and more particularly to provide a solution to enable analysts to be supported by more evolutive, easier to use and finer grained filtering and search tools.

It is in particular desirable to provide a solution that is simple and cost-effective.

### SUMMARY OF THE INVENTION

To that end, it is disclosed herein a method for storing information in a database or knowledge base, wherein the method comprises: performing deep learning of an artificial neural network using images as input dataset; once the artificial neural network has been trained, inputting images associated with the information to be stored in the database or knowledge base, and extracting, for each input image, feature maps of at least one hidden layer of the artificial neural network; generating, for each input image, an embedding from the extracted feature maps; storing the information in the database or knowledge base in association with their respective images in image fields indexed on the basis of the generated embeddings. The method further comprises: collecting geometrically registered satellite images so as to form a first time series of reference images, generating images patches by randomly extracting adjacent pixels in the reference images so as to form second time series of image patches, the image patches being thus a portion of said reference images from which they are obtained; and the deep learning of the artificial neural network is performed using the second time series of image patches and class labels that are automatically generated in such a way that a unique class label is associated with each second time series of image patches.

Thus, with such indexing, further retrieval of information from the database or knowledge base is made easier. Moreover, the dataset to be used to obtain efficient deep learning is mainly automatically obtained. Deep learning is thus improved in terms of time and involvement from analysts. It enables obtaining a neural network model suitable for generating generic embeddings, which may be used for directly indexing the image fields or which may be used for deep learning refinement for finer grained filtering (specialized filtering to specific thematic).

According to a particular embodiment, the input dataset used to perform deep learning is completed by processing images resulting from at least one predefined visual transformation of the images of the input dataset.

Thus, the result of the deep learning provides more efficient indexing and more relevant information retrieval, therefore improving system robustness.

According to a particular embodiment, the embeddings are generated from a combination of extracted feature maps which is obtained by max pooling, mean pooling, or generalized mean pooling.

Thus, embeddings are easily generated.

According to a particular embodiment, the method comprises sub-sampling the image patches and further deriving multiscale embeddings as generated embeddings.

Thus, it increases chances to obtain different visual content from one resolution to another, which further enhances the deep learning process with enlarged dataset.

According to a particular embodiment, the method comprises: collecting thematic reference images, which are multiple observations of a same entity in different capture conditions; performing a refined deep learning of the artificial neural network using the thematic reference images.

Thus, it enables obtaining a refined neural network model suitable for generating thematic embeddings. Finer grained filtering is thus easily obtained.

According to a particular embodiment, the image fields are indexed on the basis of the embeddings generated using the deep learning of the artificial neural network with the second time series of image patches and of the embeddings generated using the deep learning of the artificial neural network with the thematic reference images.

Thus, indexing is enriched, which enables more powerful information retrieval from the database or knowledge base.

It is further disclosed herein an information system configured for storing information in a database or knowledge base, wherein the information system comprises electronic circuitry configured for: performing deep learning of an artificial neural network using images as input dataset; once the artificial neural network has been trained, inputting images associated with the information to be stored in the database or knowledge base, and extracting, for each input image, feature maps of at least one hidden layer of the artificial neural network; generating, for each input image, an embedding from the extracted feature maps; storing the information in the database or knowledge base in association with their respective images in image fields indexed on the basis of the generated embeddings. The electronic circuitry is further configured for: collecting geometrically registered satellite images so as to form a first time series of reference images; generating images patches by randomly extracting adjacent pixels in the reference images so as to form second time series of image patches, the image patches being thus a portion of said reference images from which they are obtained; and the deep learning of the artificial neural network is performed using the second time series of image patches and class labels that are automatically generated in such a way that a unique class label is associated with each second time series of image patches.

It is further disclosed herein an information system configured for retrieving information from a database or knowledge base from a query image, wherein the information system comprises electronic circuitry configured for: retrieving a model of an artificial neural network that has been used for generating embeddings and indexing images in image fields of the database or knowledge base according to the foregoing method in any one of its embodiments; configuring an artificial neural network with the retrieved model; extracting, for the query image, feature maps of at least one hidden layer of the artificial neural network and generating, from the extracted feature maps, an embedding for the query image; searching, in the image fields of the database or knowledge base, the images similar to the query image, by using the embedding generated for the query image and the embedding-based indexing according to the foregoing method in any one of its embodiments; providing, in response to the query image, the information stored in the database or knowledge base and associated with the images similar to the query image.

It is further disclosed herein a method for retrieving information from a database or knowledge base from a query image, wherein the method comprises: retrieving a model of an artificial neural network that has been used for generating embeddings and indexing images in image fields of the database or knowledge base according to the foregoing method; configuring an artificial neural network with the retrieved model; extracting, for the query image, feature maps of at least one hidden layer of the artificial neural network and generating, from the extracted feature maps, an embedding for the query image; searching, in the image fields of the database or knowledge base, the images similar to the query image, by using the embedding generated for the query image and the embedding-based indexing according to the foregoing method; providing, in response to the query image, the information stored in the database or knowledge base and associated with the images similar to the query image.

Thus, retrieval of information from the database or knowledge base is easily achieved.

According to a particular embodiment, the method comprises: extracting data associated with images stored in the database or knowledge base which have been found, when searching in the image fields of the database or knowledge base, to be similar to the query image; associating or incorporating the extracted data within the query image.

Thus, relevant data can be easily associated with a new image (the query image).

According to a particular embodiment, the method comprises displaying the information provided in response to the query image as well as the images which have been found, when searching in the image fields of the database or knowledge base, to be similar to the query image.

Thus, analysts can easily judge relevance of the information automatically retrieved from the database or knowledge base.

It is further disclosed herein a computer program product comprising program code instructions that can be loaded in a programmable device for implementing one or the other of the foregoing methods in any one of their embodiments, when the program code instructions are run by the programmable device. It is further disclosed herein an information storage medium storing instructions of such a computer program product.

### BRIEF DESCRIPTION OF THE DRAWINGS

The characteristics of the invention will emerge more clearly from a reading of the following description of at least one embodiment, said description being produced with reference to the accompanying drawings, among which:
- Figs. 1A, 1B and 1C schematically represent an architecture of an information system configured for populating a database or a knowledge base (Fig. 1A), and for searching information therefrom (Fig. 1B);
- Fig. 2 schematically represents an algorithm for populating and organizing the database of knowledge base, according to a first embodiment;
- Fig. 3 schematically represents an algorithm for populating and organizing the database of knowledge base, according to a second embodiment;
- Fig. 4 schematically represents an algorithm for searching information from the database or a knowledge base; and
- Fig. 5 schematically represents an example of hardware architecture usable for implementing the information system architecture of Figs. 1A, 1B and 1C.

### DETAILED DESCRIPTION OF AT LEAST ONE EMBODIMENT

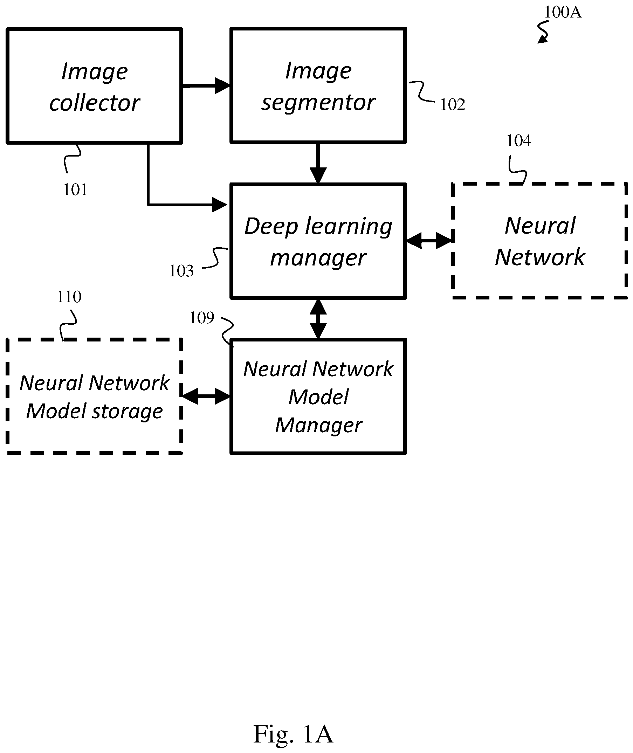

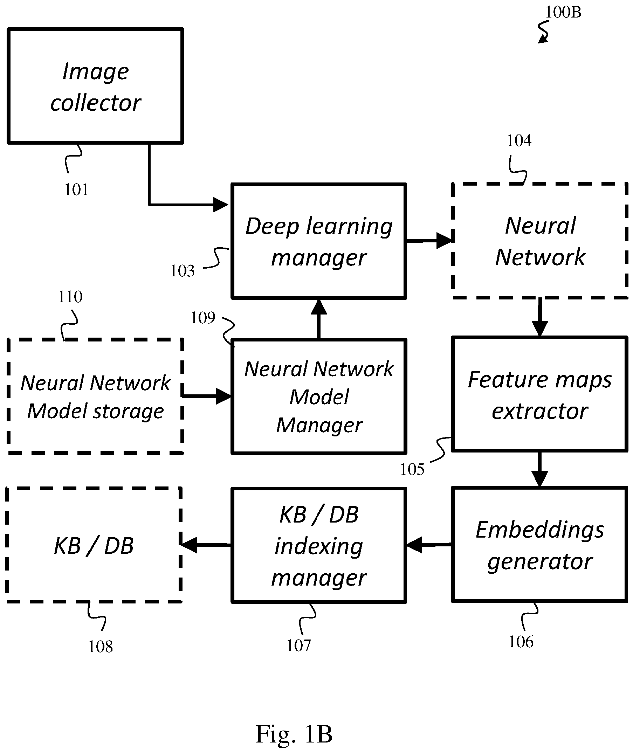

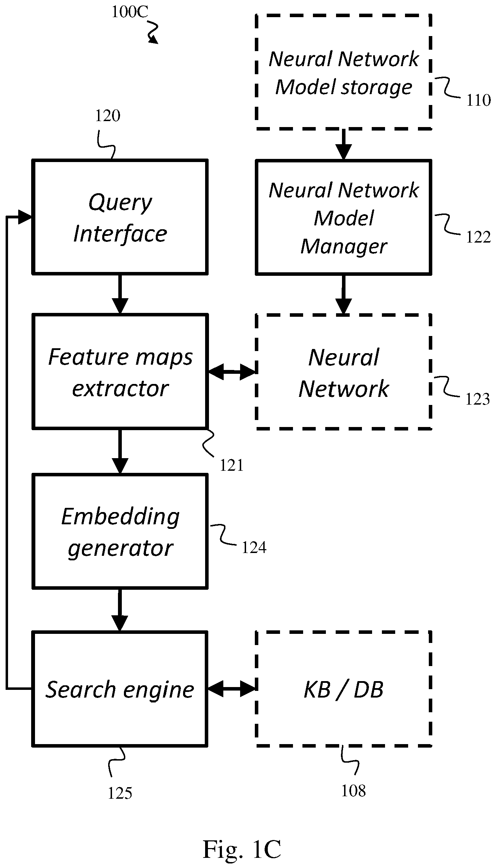

Figs. 1A, 1B and 1C schematically represent an architecture of an information system configured for performing deep learning (Fig. 1A), for generating embeddings for indexing image fields of a database DB or a knowledge base KB 108 (Fig. 1B), and for searching information therefrom (Fig. 1C).

Fig. 1A schematically represents the architecture of the information system in a first configuration 100A. The first configuration 100A in Fig. 1A presents functional modules of the information system which are used for deep learning.

The first configuration 100A uses an artificial neural network 104, such as a Convolutional Neural Network CNN. The first configuration 100A is used to train the artificial neural network 104 in order to be then able to generate image embeddings generation used for indexing image fields of the database or knowledge base 108, as disclosed hereafter.

The artificial neural network 104 may be part of the information system or external thereto. The artificial neural network 104 is typically formed by an input layer to input images, an output layer to provide results of classification of the input images, and hidden layers therebetween where computation is performed to enable classification. Each layer applies filters on inputs in order to obtain feature maps (also referred to as *activation maps*). Filter may be chained in a layer. For example, a layer L can apply a convolutional filter on the feature map output for the preceding layer L-1 so as to obtain a first feature map, and apply a pooling (e.g., sub-sampling) filter to obtain a second feature map from the first feature map which is then output to the next layer L+1.

The first configuration 100A includes an image collector 101 in charge of collecting reference images used to train the artificial neural network 104 so as to be then able to provide features maps for generating embeddings used for indexing image fields of the database DB or knowledge base KB 108. As detailed hereafter, different training datasets may be collected by the image collector 101 so as to reach different configurations of the artificial neural network 104. A first configuration of the artificial neural network 104 is suitable for generating coarse embeddings, referred to as generic embeddings. A second configuration of the artificial neural network 104 is suitable for generating refined embeddings, referred to as thematic embeddings.

The first configuration 100A further includes an image segmentor 102 in charge of generating image patches from reference images provided by the image collector 101. The image patches are generated by randomly extracting adjacent pixels in the reference images in question, the image patches being thus a portion of said reference images from which they are obtained. As detailed hereafter, not all the reference images are processed by the image segmentor 102. More particularly, the reference images used to train the artificial neural network 104 for generating the thematic embeddings are not processed by the image segmentor 102.

In a particular embodiment, the training dataset can be completed by processing images resulting from at least one predefined visual transformation (e.g., rotation, scaling factor, partial masking simulation, radiometric changes simulation...) applied to the reference images, in order to further improve system robustness.

In a particular embodiment, the image segmentor 102 is configured to sub-sample the image patches (compared with the reference images) in order to be further able to derive multiscale embeddings and increase chances to obtain different visual content from one resolution to another.

The first configuration 100A further includes a deep learning manager 103 in charge of training the artificial neural network 104 to predict the class of the second time series of image patches, by using the second time series of image patches and their associated class identifiers as training dataset. The deep learning manager 103 is configured to associate a unique class identifier (or class label) with each second time series of image patches. Preferably, the unique class identifiers (or class labels) are automatically generated and attributed by the first configuration 100A (i.e., with no semantic meaning). The deep learning manager 103 provides ability for analysts to supervise the training of the artificial neural network 104.

The first configuration 100A further includes a neural network model manager 109 in charge of memorizing, in a Neural Network Model storage 110, the configuration of the artificial neural network 104 once the training has been completed, in order to be able to later on retrieve and reinstall the configuration of the neural network 104 as trained. Recording of the configuration of the artificial neural network 104 by the neural network model manager 109 may be instructed by the deep learning manager 103.

The first configuration 100A is used to train the artificial neural network 104 so as to be then able to generate embeddings from features maps extracted from the artificial neural network 104 when inputting new images therein. The new images are images associated with information to be stored and are intended to be stored, in the database or knowledge base 108, in image fields associated with said information. For instance, the information to be stored is a set of collected data related to an object (e.g., a vehicle, a building...), and embeddings are generated thanks to the trained artificial neural network 104 using at least one image showing the object in question. Plural indexed images may be associated with the same set of information in the database or knowledge base 108. This set of information is therefore associated with plural image fields, meaning plural embeddings (one for each image). Indexing is then made in the database or knowledge base 108 using said embeddings, in order to enable fast retrieval of said stored information by searching the database or knowledge base 108 using a query image and the indexed image fields associated with said stored information.

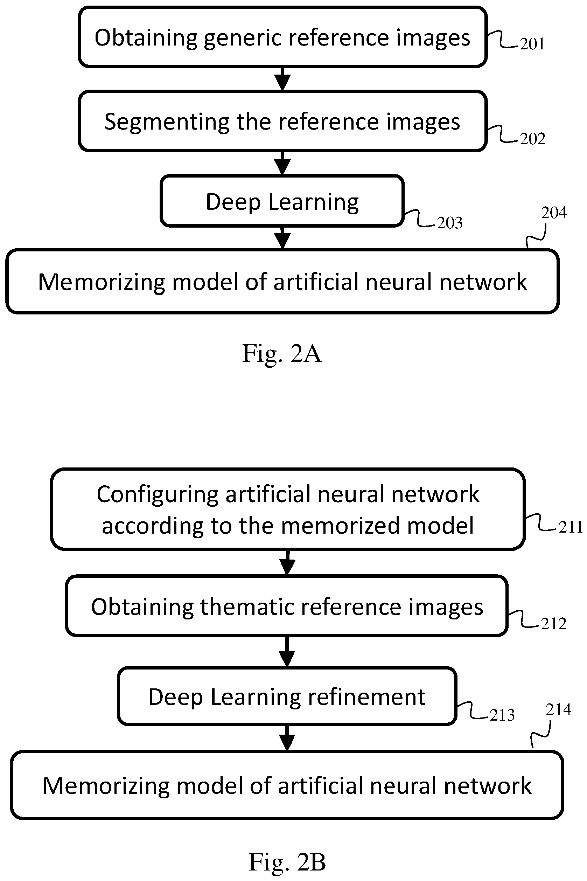

The first configuration 100A can be used to preferably train the artificial neural network 104 for two types of embeddings: generic embeddings and thematic embeddings, as further detailed hereafter with respect to Figs. 2A and 2B. For generating the generic embeddings, the artificial neural network 104 has to be trained once with a first set of reference images. For generating the thematic embeddings, the artificial neural network 104 has to be trained once again, starting from the configuration suitable to the generic embeddings, with a second set of reference images.

For generating the generic embeddings, the first set of reference images is first time series of reference images. The reference images are geometrically registered satellite images. The first set of reference images is processed by the image segmentor 102. The image segmentor 102 thus automatically generates, from the reference images in question, a training dataset comprising a quantity of second time series of image patches significantly larger than the quantity of first time series of reference images.

**Fig. 1B** schematically represents the architecture of the information system in a second configuration 100B. The first configuration 100A in Fig. 1A presents functional modules of the information system which are used for indexing image fields of the database or knowledge base 108.

The purpose of indexing (storing contents in association with an index) is to optimize speed and performance in finding relevant items as a result of a search query. Without such indexing, a search engine would have to parse and analyse every stored information, which would require considerable time and processing resources for large indexed databases.

The second configuration 100B includes the image collector 101, the deep learning manager 103, and the neural network model manager 109, as already disclosed above. Images to be used as references for indexing the database or knowledge base 108 are provided to the image collector 101.

The second configuration 100B further includes a feature maps extractor 105 in charge of extracting feature maps of one or more hidden layer of the artificial neural network 104. In a particular embodiment, the feature maps extractor 105 extracts, from the artificial neural network 104, only the feature maps output by the N last hidden layers (the N layers before the output layer, with N > 0). In another particular embodiment, the feature maps extractor 105 extracts, from the artificial neural network 104, only the feature maps output by the last hidden layer (the one before the output layer).

The second configuration 100B further includes an embeddings generator 106 in charge of generating embeddings from the feature maps provided by the feature maps extractor 105. Embeddings are generated from the combination of extracted feature maps for instance by max pooling, mean pooling, or generalized mean pooling, as detailed hereafter, the embeddings may be generic embeddings or thematic embeddings. Embeddings are mappings of input images to vectors of low-dimensional continuous numbers. Embeddings enable reducing dimensionality of categorical variables, as contained in input images, with such vector representations, and vector space provides a meaningful tool for searching for similarities.

The second configuration 100B further includes a database or knowledge base indexing manager 107 in charge of indexing one or several image fields of the information stored database or knowledge base 108, according to the embeddings provided by the embeddings generator 106.

Note that knowledge bases are distinguished from databases. An explanation is given in the document *"Knowledge Base Support for Decision Making Using Fusion Techniques in a C2 Environment"* (Amanda Vizedom et al, Proceedings of the 4th International Conference on Information Fusion, International Society of Information Fusion, 2001), where it is indicated that the distinction between knowledge bases and databases lies in the distinction between general knowledge and specific data. A knowledge base is optimized for storing general, potentially complex knowledge of the type that can be instantiated. A database, on the other hand, generally lacks the means to represent general principles, but is optimized to store very specific data, such as lists of items and attributes. The added value of knowledge bases lies in that they constitute the basis of a reasoning in which new information is deduced from what is already known. It goes beyond finding data. Reasoning with a knowledge base involves applying and combining general knowledge to draw conclusions implicit, but not explicitly contained in the original information. This knowledge-based reasoning enables diagnosis, monitoring, and general response to queries to a depth not possible with a database.

The database or knowledge base indexing manager 107 is thus configured to store the generated embeddings in one or more image fields of the database or knowledge base 108, with indexing according to the embeddings, thus enabling later on fast retrieval of information from the database or knowledge base 108 from an image-based query. The information system may further include the database or knowledge base 108.

**Fig. 1C** schematically represents the architecture of the information system in a third configuration 100C. The third configuration 100C uses an artificial neural network 123, such as a Convolutional Neural Network CNN, in order to search in the database or knowledge base 108.

The third configuration 100C includes a query interface 120 in charge of receiving query images, for which similar images and/or information associated with such similar images have to be searched in the database or knowledge base 108. Providing the query interface 120 with query images may be an automatic process, in which newly collected satellite image observations, or patches thereof, may be input as query images, in order to find out whether said collected satellite images contain similarities with images stored in the database or knowledge base 108 and to output (e.g., display on a Graphical User Interface for further investigations by analysts) similar images found in the database or knowledge base 108 and/or information associated therewith. The query images may also be entered following approval by the analysts (e.g., selected by the analysts via the Graphical User Interface). For instance, retrieving similar images and/or information associated with such similar images from a knowledge base helps in performing information fusion, namely deciding to merge or not, in the knowledge base, information related to the query image with information related to similar images contained therein.

The third configuration 100C further includes a neural network model manager 122 in charge of retrieving configuration stored in the Neural Network Model storage 110 and of configuring the artificial neural network 123 with the retrieved configuration. The artificial neural network 123 thus acts like the artificial neural network 104 after having been trained.

The third configuration 100C further includes a feature maps extractor 121 in charge of extracting feature maps of one or more hidden layer of the artificial neural network 123. The feature maps extractor 121 acts with the artificial neural network 123 like the feature maps extractor 105 acts with the artificial neural network 104.

The third configuration 100C further includes an embeddings generator 124 in charge of generating embeddings from the query images provided by the query interface 110. The embeddings generator 124 acts with the feature maps extractor 121 like the embeddings generator 106 acts with the feature maps extractor 105.

The third configuration 100C further includes a search engine 125 in charge of searching in the database or knowledge base 108 image fields similar to the query images. To do so, the search engine 125 relies on the embeddings generated by the embeddings generator 124 and on the indexing performed by the database or knowledge base indexing manager 107. Similarities are investigated by computing distance (e.g., Euclidian distance or cosine similarity) between query-related embeddings and embeddings used for the indexing in the database or knowledge base 108. Using the embeddings accelerates the search and retrieval of similar images stored in the database or knowledge base 108 and of information associated therewith. The search engine 125 is further configured for providing the query interface 120 with the similar images, and/or information associated therewith, found in the image fields of the database or knowledge base 108.

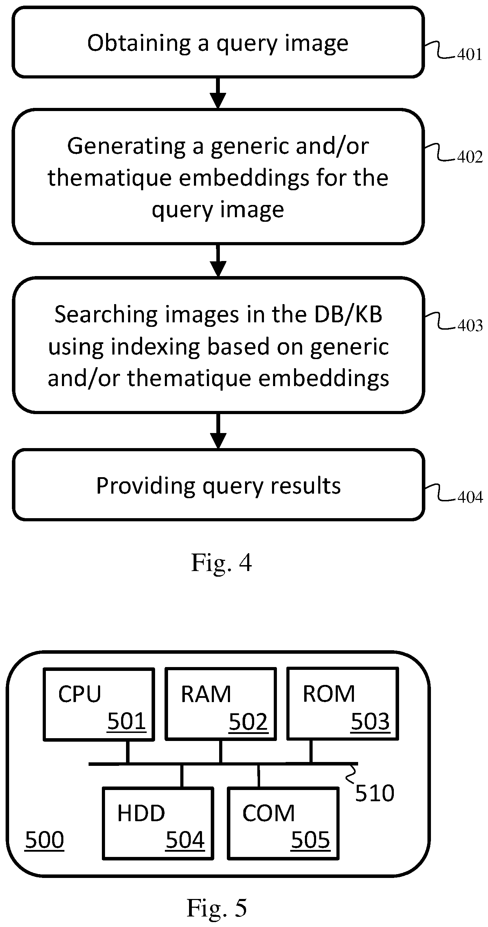

The information system may be constituted by separate computing machines (e.g., computers, servers...). For example, one computing machine is used for training the artificial neural network 104 and obtaining the corresponding model(s) (Fig. 1A), one computing machine is used to generate the embeddings and perform indexing of the database or knowledge base 108 (Fig. 1B), and one computing machine is used for submitting queries (Fig. 1C). In other example, one computing machine is used for training the artificial neural network 104 and obtaining the corresponding model(s) (Fig. 1A), as well as to generate the embeddings and perform indexing of the database or knowledge base 108 (Fig. 1B), and one computing machine is used for submitting queries (Fig. 1C). The information system may, in a variant, be a single computing machine; in this case, some functions in Figs. 1A, 1B and 1C may be operated by a single module or component (whether software or hardware, as disclosed hereafter with respect to Fig. 5). For instance, the functions of the feature maps extractors 105 and 121 may be operated by a same module or component. As another example, the artificial neural networks 104 and 123 may be a single artificial neural network, sometimes used for training the artificial neural network 104, and later on sometimes used for indexing the database or knowledge base 108 when adding new information therein, and sometimes used for submitting queries for retrieving information from the database or knowledge base 108.

**Fig. 2A** schematically represents an algorithm for training the artificial neural network 104, according to a first embodiment. The algorithm in Fig. 2A is executed by the information system, and more particularly according to the first configuration 100A. The algorithm of Fig. 2A is executed for obtaining a neural network model suitable for generating generic embeddings.

In a step 201, the information system obtains first time series of geometrically registered satellite images. The first time series of satellite images are intended to be used herein with a goal of automatically generating a large training dataset of image patches time series to efficiently train the artificial neural network 104 in view of extracting embeddings. The time series are geometrically registered satellite images of a same subject (e.g., same geographical site) captured at different points in time from similar points of view.

In a step 202, the information system automatically generates second time series of image patches from the first time series of satellite images. To do so, the information system generates the image patches by segmenting the satellite images. More particularly, the image patches are generated by randomly extracting adjacent pixels in the satellite images, the image patches being thus a portion of the satellite images from which they are obtained. As the generation of this dataset of second time series is automatic, it is easy to generate a very large dataset as required by the learning process of deep artificial neural networks. As the artificial neural network 104 is trained on randomly sampled satellite image observations, embeddings extracted from its features maps are called "generic embeddings".

In a step 203, the information system initiates deep learning using the artificial neural network 104. The information system associates a unique class identifier (or class label) with each second time series of image patches, thus assuming that each second time series represents a different class. Preferably, the unique class identifiers (or class labels) are automatically generated and attributed by the information system. The information system trains the artificial neural network 104 using, as inputs, the second time series of image patches and, as expected outputs, the class identifiers (or class labels) attributed thereto.

The deep learning process may be done in several cycles. Once the artificial neural network 104 has performed a training cycle with the second time series of image patches, classification performed by the artificial neural network 104 is inferred on all the training dataset images patches from the second time series, in order to determine whether or not actual configuration of the artificial neural network 104 leads to classification ambiguities on the training dataset. If classification ambiguities appear, it is assumed that it mainly results from second time series randomly picked on visually similar locations. The ambiguities are automatically resolved either through the fusion of the ambiguous second time series in a single second time series for each ambiguity, or through the suppression, for each ambiguity, of the most ambiguous second time series. A new training cycle is performed, by training again the artificial neural network 104 on the corrected dataset of second time series of image patches in which second time series causing classification ambiguities have been merged or removed. And so on until no or an acceptable number (below a predefined threshold) of classification ambiguities remain.

In a step 204, once the artificial neural network 104 has been trained, the information system memorizes a model of the artificial neural network 104 as trained. The model thus memorized can then be used to configure an artificial neural network used to generate generic embeddings for easing search and retrieval of information from the database or knowledge base 108, from its indexed image fields, as disclosed hereafter with respect to Fig. 4.

**Fig. 2B** schematically represents an algorithm for training the artificial neural network 104, according to a second embodiment. The algorithm in Fig. 2B is executed by the information system, and more particularly according to the first configuration 100A. The algorithm of Fig. 2B is executed for obtaining a neural network model suitable for generating thematic embeddings.

In a step 211, the information system retrieves the neural network model memorized (see the foregoing step 204) following the training as performed in the algorithm of Fig. 2B and configures an artificial neural network, such as the artificial neural network 104, according to the retrieved neural network model.

In a step 212, the information system obtains thematic reference images. The thematic reference images are multiple observations of a same entity (e.g., a same model of aircraft: Airbus A380 model), belonging to a same "thematic" family (e.g., aircrafts), in different capture conditions (weather, date, angle). While collecting the thematic reference images, maximizing the quantity of different entities observed is favoured compared with the quantity of observations per entity.

The thematic reference images are intended to be used herein with a goal of generating thematic embeddings, as a refinement of the generic embeddings. Thematic embeddings are embeddings resulting from a training of the artificial neural network in which the artificial neural network has been re-trained using reference images that are entity-oriented for a given theme (e.g., aircrafts).

In a step 213, the information system refines the training of the artificial neural network 104 using the thematic reference images. As it results from the step 201, the configuration of the artificial neural network 104 which enables to generate generic embeddings is used as starting point for deep learning refinement. The information system associates a unique class identifier (or class label) with the thematic reference images presenting the same entity (e.g., a same model of aircraft: Airbus A380 model). Analysts instruct the information system about which thematic reference images relate to the same entity. The information system trains the artificial neural network 104 using, as inputs, the thematic reference images and, as expected outputs, the class identifiers (or class labels) attributed thereto.

The deep learning refinement may be done in several cycles. Once the artificial neural network 104 has performed a training refinement cycle with the thematic reference images, classification performed by the artificial neural network 104 is inferred on the training images, in order to determine whether or not actual configuration of the artificial neural network 104 leads to misclassification on the training dataset. If misclassification appears, the analysts check if misclassification is due to images wrongly allocated to different classes or corresponding to different entities but not visually distinguishable. If this is the case, corresponding classes may be merged to generate a corrected dataset. A new training refinement cycle is performed, by training again the artificial neural network 104 with the corrected dataset. And so on until no or an acceptable number (below a predefined threshold) of misclassifications remain on the training dataset.

In a step 214, once the artificial neural network 104 has been trained, the information system memorizes a model of the artificial neural network 104 as trained. The model thus memorized can then be used to configure an artificial neural network used to generate generic embeddings for easing search and retrieval of information from the database or knowledge base 108, from its indexed image fields, as disclosed hereafter with respect to Fig. 4.

Once the artificial neural network 104 has been trained, the contents of the database or knowledge base 108 can be enriched using image-fields indexing based on the generic embeddings, as generated according to the algorithm of Fig. 2A) or the thematic embeddings, as generated according to the algorithm of Fig. 2B). Image-fields indexing can be based on a combination of both generic and thematic embeddings (e.g., embeddings concatenation).

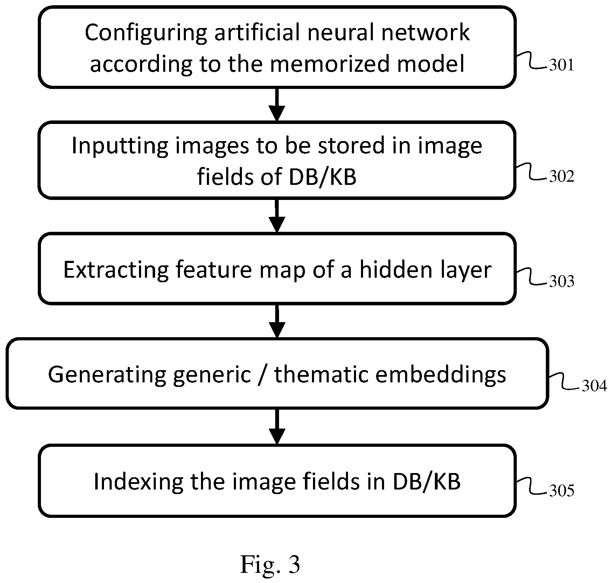

**Fig. 3** schematically represents an algorithm for indexing and organizing information stored in the database or knowledge base 108. The algorithm in Fig. 3 is executed by the information system, and more particularly according to the second configuration 100B.

In a step 301, the information system retrieves the neural network model following the training that enables obtaining embeddings to be used for indexing. In the particular embodiment of generic embeddings, the information system retrieves the neural network model memorized in the step 204. In the particular embodiment of thematic embeddings, the information system retrieves the neural network model memorized in the step 214. The information system then configures an artificial neural network, such as the artificial neural network 104, according to the retrieved neural network model.

In a step 302, the information system obtains images to be stored in image fields of the database or knowledge base 108. The database or knowledge base 108 is used to store various information about objects (e.g., buildings, boats...). The information related to each object is associated with at least one image field containing an image representing the object in question. As detailed hereafter, the purpose of the algorithm of Fig. 3 is to use embeddings to index the image fields in the database or knowledge base 108. The images obtained in the step 302 are typically images not included in the dataset used for training the artificial neural network. However, some images may be in common.

In a step 303, the information system extracts feature maps of one or more hidden layers of the artificial neural network 104. As already mentioned, only the feature maps output by the N last hidden layers (N > 0), or only the feature maps output by the last hidden layer, may be extracted.

In a step 304, the information system generates embeddings from the extracted features maps. The information system combines the extracted feature maps, for instance by max pooling, mean pooling or generalized mean pooling. When the artificial neural network 104 has been configured in the step 301 with the neural network model memorized in the step 204, generic embeddings are generated. When the artificial neural network 104 has been configured in the step 301 with the neural network model memorized in the step 214, thematic embeddings are generated. In a particular embodiment, generic and thematic embeddings are combined (e.g., concatenated) for further image-fields indexing in the database or knowledge base 108. It means in this case that the information system uses two artificial neural networks, one configured for enabling generating the generic embeddings and one configured for generating the thematic embeddings.

In a step 305, the information system indexes one or several image fields of the database or knowledge base 108, on the basis of their respective embeddings. Information stored in the database or knowledge base 108 is associated with one or more image fields. The image fields store images for which embeddings have been obtained. The image fields are used to help retrieving relevant information stored in the database or knowledge base 108 from a submitted query image, as detailed hereafter with respect to Fig. 4. Indexing the image fields according to the obtained embeddings enables fast retrieval of the relevant information.

One may note that indexing using thematic embeddings can efficiently be used, in a context of satellite images, to retrieve information associated with recorded observations of thematic similar to a query entity (e.g., a boat). This can be exploited to perform rapid counting of particular entities (e.g., counting boats in a harbor), or for raising alerts when detecting particular entities (e.g., detecting boats in a particular geographical zone).

**Fig. 4** schematically represents an algorithm for searching information from the database or a knowledge base. The algorithm in Fig. 4 is executed by the information system, and more particularly according to the third configuration 100C.

In a step 401, the information system obtains a query image, for which similar images have to be searched in image fields of the data base or knowledge base 108. The size of the query image is equivalent to the size of the images used to index the image fields of the database or knowledge base 108. Indexing may be done for various resolutions of a same image, so as to enable accepting query images of various sizes when querying the database or knowledge base 108.

In a step 402, the information system generates an embedding from the query image. To do so, the query image is processed by the artificial neural network 123 after having been configured with the adequate memorized neural network model with respect to the embeddings used for indexing the image fields of the database or knowledge base 108. In the particular embodiments disclosed above with respect to Figs. 2A and 2B, the information system generates generic embeddings or thematic embeddings. To generate the embeddings, feature maps are extracted from the artificial neural network 123 and combined, like when generating the embeddings that have been used to index the contents of the data base or knowledge base 108. In the particular embodiment where generic and thematic embeddings were both combined (e.g., concatenated) for further image-fields indexing in the database or knowledge base 108, the information system also uses two artificial neural networks in the step 402, one configured for enabling generating the generic embedding from the query image and one configured for generating the thematic embedding from the query image. Generic and thematic embeddings thus obtained are then combined identically as previously done for image-fields indexing in the database or knowledge base 108.

In a step 403, the information system searches images in the image fields associated with the records stored in the database or knowledge base 108 using embeddings-based indexing. Search is performed using similarity distance computation between the query-related embedding and the indexing-related embeddings, for instance using Euclidian distance or cosine similarity. The information system thus retrieves from the database or knowledge base 108 information associated with the closest corresponding images or whose distance is lower than a predefined threshold.

In a step 404, the information system provides query results. For instance, the information system displays to the analysts not only the information associated with the similar images which have been retrieved from the database or knowledge base 108, but also the similar images themselves to enable the operator to judge whether or not the retrieved information is indeed related to its query. This may be used when requesting approval from the analyst with respect to search results. Displaying said images used to select the information retrieved from the database thus contributes to a better system explainability.

As already mentioned, retrieving information associated with such similar images from a knowledge base helps in performing information fusion. Similarity search based on thematic embedding of a query image and an embeddings-indexed database or knowledge base can thus be used to extract data associated with images stored in the database or knowledge base which are most similar to the query image. The extracted data can then be associated or incorporated within the query image. The query image can then be incorporated in the database or knowledge base contents, with its corresponding embedding for indexing matters. Approval from the analyst may be requested to do so.

**Fig. 5** schematically represents an example of hardware architecture 500 usable for implementing the information system architecture shown in Fig. 1 and the algorithms shown in Figs. 2 to 4.

The hardware architecture 500 comprises the following components interconnected by a communications bus 510: a processor, microprocessor, microcontroller or CPU (Central Processing Unit) 501; a RAM (Random-Access Memory) 502; a ROM (Read-Only Memory) 503, such as an EEPROM (Electrically Erasable Programmable ROM), for example a Flash memory; a HDD (Hard-Disk Drive) 504, or any other device adapted to read information stored on a storage medium, such an SD (Secure Digital) card reader; at least one communication interface COM 505.

CPU 501 is capable of executing instructions loaded into RAM 502 from ROM 503 or from an external memory, such as HDD 504 or an SD card. After the hardware architecture 500 has been powered on, CPU 501 is capable of reading instructions from RAM 502 and executing these instructions. The instructions form one computer program that causes CPU 501 to execute the steps and behaviors disclosed herein.

Thus, the steps and algorithms disclosed herein may be implemented in software form by execution of a set of instructions or program by a programmable computing machine, such as a PC, a DSP (Digital Signal Processor) or a processor; or else implemented in hardware form by a machine or a dedicated chip or chipset, such as an FPGA (Field-Programmable Gate Array) or an ASIC (Application-Specific Integrated Circuit). More generally, the information system comprises electronic circuitry configured to perform the steps and algorithms disclosed herein.

## Claims

1. A method for storing information in a database or knowledge base, wherein the method comprises:
- performing deep learning of an artificial neural network using images as input dataset;
- once the artificial neural network has been trained, inputting images associated with the information to be stored in the database or knowledge base, and extracting, for each input image, feature maps of at least one hidden layer of the artificial neural network;
- generating, for each input image, an embedding from the extracted feature maps;
- storing the information in the database or knowledge base in association with their respective images in image fields indexed on the basis of the generated embeddings,
wherein the method further comprises:
- collecting geometrically registered satellite images so as to form a first time series of reference images;
- generating images patches by randomly extracting adjacent pixels in the reference images so as to form second time series of image patches, the image patches being thus a portion of said reference images from which they are obtained;
and wherein the deep learning of the artificial neural network is performed using the second time series of image patches and class labels that are automatically generated in such a way that a unique class label is associated with each second time series of image patches.

2. The method according to claim 1, wherein the input dataset used to perform deep learning is completed by processing images resulting from at least one predefined visual transformation of the images of the input dataset.

3. The method according to claim 1 or 2, wherein the embeddings are generated from a combination of extracted feature maps which is obtained by max pooling, mean pooling, or generalized mean pooling.

4. The method according to any one of claims 1 to 3 , wherein the method comprises:
- sub-sampling the image patches and further deriving multiscale embeddings as generated embeddings.

5. The method according to any one of claims 1 to 4, wherein the method comprises:
- collecting thematic reference images, which are multiple observations of a same entity in different capture conditions;
- performing a refined deep learning of the artificial neural network using the thematic reference images.

6. The method according to claim 5, wherein the image fields are indexed on the basis of the embeddings generated using the deep learning of the artificial neural network with the second time series of image patches and of the embeddings generated using the deep learning of the artificial neural network with the thematic reference images.

7. A method for retrieving information from a database or knowledge base from a query image, wherein the method comprises:
- retrieving a model of an artificial neural network that has been used for generating embeddings and indexing images in image fields of the database or knowledge base according to the method of any one of claims 1 to 6;
- configuring an artificial neural network with the retrieved model;
- extracting, for the query image, feature maps of at least one hidden layer of the artificial neural network and generating, from the extracted feature maps, an embedding for the query image;
- searching, in the image fields of the database or knowledge base, the images similar to the query image, by using the embedding generated for the query image and the embedding-based indexing according to the method of any one of claims 1 to 6;
- providing, in response to the query image, the information stored in the database or knowledge base and associated with the images similar to the query image.

8. The method according to claim 7, wherein the method comprises:
- extracting data associated with images stored in the database or knowledge base which have been found, when searching in the image fields of the database or knowledge base, to be similar to the query image;
- associating or incorporating the extracted data within the query image.

9. The method according to claim 7 or 8, wherein the method comprises:
- displaying the information provided in response to the query image as well as the images which have been found, when searching in the image fields of the database or knowledge base, to be similar to the query image.

10. A computer program product comprising program code instructions that can be loaded in a programmable device for implementing the method according to any one of claims 1 to 6 or the method according to any one of claims 7 to 9, when the program code instructions are run by the programmable device.

11. An information storage medium storing instructions that can be loaded in a programmable device for implementing the method according to any one of claims 1 to 6 or the method according to any one of claims 7 to 9, when the instructions are read from the information storage medium and run by the programmable device.

12. An information system configured for storing information in a database or knowledge base, wherein the information system comprises electronic circuitry configured for:
- performing deep learning of an artificial neural network using images as input dataset;
- once the artificial neural network has been trained, inputting images associated with the information to be stored in the database or knowledge base, and extracting, for each input image, feature maps of at least one hidden layer of the artificial neural network;
- generating, for each input image, an embedding from the extracted feature maps;
- storing the information in the database or knowledge base in association with their respective images in image fields indexed on the basis of the generated embeddings,
wherein the electronic circuitry is further configured for:
- collecting geometrically registered satellite images so as to form a first time series of reference images;
- generating images patches by randomly extracting adjacent pixels in the reference images so as to form second time series of image patches, the image patches being thus a portion of said reference images from which they are obtained;
and wherein the deep learning of the artificial neural network is performed using the second time series of image patches and class labels that are automatically generated in such a way that a unique class label is associated with each second time series of image patches.

13. An information system configured for retrieving information from a database or knowledge base from a query image, wherein the information system comprises electronic circuitry configured for:
- retrieving a model of an artificial neural network that has been used for generating embeddings and indexing images in image fields of the database or knowledge base according to the method of any one of claims 1 to 6;
- configuring an artificial neural network with the retrieved model;
- extracting, for the query image, feature maps of at least one hidden layer of the artificial neural network and generating, from the extracted feature maps, an embedding for the query image;
- searching, in the image fields of the database or knowledge base, the images similar to the query image, by using the embedding generated for the query image and the embedding-based indexing according to the method of any one of claims 1 to 6;
- providing, in response to the query image, the information stored in the database or knowledge base and associated with the images similar to the query image.

## Patentansprüche

1. Verfahren zum Speichern von Informationen in einer Datenbank oder Wissensdatenbank, wobei das Verfahren umfasst:
- Durchführen von tiefem Lernen eines künstlichen neuronalen Netzwerks unter Verwendung von Bildern als Eingabedatensatz;
- sobald das künstliche neuronale Netzwerk trainiert wurde, Eingeben von Bildern, die den in der Datenbank oder Wissensdatenbank zu speichernden Informationen zugeordnet sind, und Extrahieren, für jedes Eingabebild, von Merkmalskarten mindestens einer verborgenen Schicht des künstlichen neuronalen Netzwerks;
- Erzeugen, für jedes Eingabebild, einer Einbettung aus den extrahierten Merkmalskarten;
- Speichern der Informationen in der Datenbank oder Wissensdatenbank in Verbindung mit ihren jeweiligen Bildern in Bildfeldern, die basierend auf den erzeugten Einbettungen indiziert sind,
wobei das Verfahren ferner umfasst:
- Sammeln geometrisch registrierter Satellitenbilder, um eine erste Zeitreihe von Referenzbildern zu bilden;
- Erzeugen von Bildflächen durch zufälliges Extrahieren benachbarter Pixel in den Referenzbildern, um eine zweite Zeitreihe von Bildflächen zu bilden, wobei die Bildflächen somit ein Abschnitt der Referenzbilder sind, aus denen sie erhalten werden;
und wobei das tiefe Lernen des künstlichen neuronalen Netzwerks unter Verwendung der zweiten Zeitreihe von Bildflächen und Klassen-Labeln, die automatisch auf eine Weise erzeugt werden, dass ein eindeutiges Klassen-Label jeder zweiten Zeitreihe von Bildflächen zugeordnet ist, durchgeführt wird.

2. Verfahren nach Anspruch 1, wobei der Eingabedatensatz, der zum Durchführen von tiefem Lernen verwendet wird, durch Verarbeiten von Bildern abgeschlossen wird, die aus mindestens einer vordefinierten visuellen Transformation der Bilder des Eingabedatensatzes resultieren.

3. Verfahren nach Anspruch 1 oder 2, wobei die Einbettungen aus einer Kombination extrahierter Merkmalskarten erzeugt werden, die durch Max-Pooling, Mean-Pooling oder generalisiertes Mean-Pooling erhalten wird.

4. Verfahren nach einem der Ansprüche 1 bis 3, wobei das Verfahren umfasst:
- Subsampeln der Bildfelder und weiteres Ableiten mehrstufiger Einbettungen als erzeugte Einbettungen.

5. Verfahren nach einem der Ansprüche 1 bis 4, wobei das Verfahren umfasst:
- Sammeln thematischer Referenzbilder, die mehrere Beobachtungen einer selben Entität bei unterschiedlichen Aufnahmebedingungen sind;
- Durchführen eines verfeinerten tiefen Lernens des künstlichen neuronalen Netzwerks unter Verwendung der thematischen Referenzbilder.

6. Verfahren nach Anspruch 5, wobei die Bildfelder basierend auf den Einbettungen, die unter Verwendung des tiefen Lernens des künstlichen neuronalen Netzwerks mit der zweiten Zeitreihe von Bildflächen erzeugt werden, und den Einbettungen, die unter Verwendung des tiefen Lernens des künstlichen neuronalen Netzwerks mit den thematischen Referenzbildern erzeugt werden, indiziert werden.

7. Verfahren zum Abrufen von Informationen aus einer Datenbank oder Wissensdatenbank aus einem Abfragebild, wobei das Verfahren umfasst:
- Abrufen eines Modells eines künstlichen neuronalen Netzwerks, das zum Erzeugen von Einbettungen und Indizieren von Bildern in Bildfeldern der Datenbank oder Wissensbasis verwendet wurde, gemäß dem Verfahren nach einem der Ansprüche 1 bis 6;
- Konfigurieren eines künstlichen neuronalen Netzwerks mit dem abgerufenen Modell;
- Extrahieren, für das Abfragebild, von Merkmalskarten mindestens einer verborgenen Schicht des künstlichen neuronalen Netzwerks und Erzeugen, aus den extrahierten Merkmalskarten, einer Einbettung für das Abfragebild;
- Suchen, in den Bildfeldern der Datenbank oder Wissensbasis, der Bilder, die dem Abfragebild ähnlich sind, durch Verwenden der Einbettung, die für das Abfragebild erzeugt wurde, und der einbettungsbasierten Indizierung gemäß dem Verfahren nach einem der Ansprüche 1 bis 6;
- Bereitstellen, als Reaktion auf das Abfragebild, der Informationen, die in der Datenbank oder Wissensdatenbank gespeichert sind und den Bildern, die dem Abfragebild ähnlich sind, zugeordnet sind.

8. Verfahren nach Anspruch 7, wobei das Verfahren umfasst:
- Extrahieren von Daten, die Bildern zugeordnet sind, die in der Datenbank oder Wissensdatenbank gespeichert sind und für die beim Suchen in den Bildfeldern der Datenbank oder Wissensdatenbank festgestellt wurde, dass sie dem Abfragebild ähnlich sind;
- Zuordnen oder Aufnehmen der extrahierten Daten innerhalb des Abfragebilds.

9. Verfahren nach Anspruch 7 oder 8, wobei das Verfahren umfasst:
- Anzeigen der Informationen, die als Reaktion auf das Abfragebild bereitgestellt werden, sowie der Bilder, für die beim Suchen in den Bildfeldern der Datenbank oder Wissensdatenbank festgestellt wurde, dass sie dem Abfragebild ähnlich sind.

10. Computerprogrammprodukt, das Programmcodeanweisungen umfasst, die in eine programmierbare Vorrichtung geladen werden können, um das Verfahren nach einem der Ansprüche 1 bis 6 oder das Verfahren nach einem der Ansprüche 7 bis 9 zu implementieren, wenn die Programmcodeanweisungen durch die programmierbare Vorrichtung ausgeführt werden.

11. Informationsspeichermedium, das Anweisungen speichert, die in eine programmierbare Vorrichtung geladen werden können, um das Verfahren nach einem der Ansprüche 1 bis 6 oder das Verfahren nach einem der Ansprüche 7 bis 9 zu implementieren, wenn die Anweisungen vom Informationsspeichermedium gelesen und durch die programmierbare Vorrichtung ausgeführt werden.

12. Informationssystem, das zum Speichern von Informationen in einer Datenbank oder Wissensdatenbank konfiguriert ist, wobei das Informationssystem eine elektronische Schaltungsanordnung umfasst, die konfiguriert ist zum:
- Durchführen von tiefem Lernen eines künstlichen neuronalen Netzwerks unter Verwendung von Bildern als Eingabedatensatz;
- sobald das künstliche neuronale Netzwerk trainiert wurde, Eingeben von Bildern, die den in der Datenbank oder Wissensdatenbank zu speichernden Informationen zugeordnet sind, und Extrahieren, für jedes Eingabebild, von Merkmalskarten mindestens einer verborgenen Schicht des künstlichen neuronalen Netzwerks;
- Erzeugen, für jedes Eingabebild, einer Einbettung aus den extrahierten Merkmalskarten;
- Speichern der Informationen in der Datenbank oder Wissensdatenbank in Verbindung mit ihren jeweiligen Bildern in Bildfeldern, die basierend auf den erzeugten Einbettungen indiziert sind,
wobei die elektronische Schaltungsanordnung ferner konfiguriert ist zum:
- Sammeln geometrisch registrierter Satellitenbilder, um eine erste Zeitreihe von Referenzbildern zu bilden;
- Erzeugen von Bildflächen durch zufälliges Extrahieren benachbarter Pixel in den Referenzbildern, um eine zweite Zeitreihe von Bildflächen zu bilden, wobei die Bildflächen somit ein Abschnitt der Referenzbilder sind, aus denen sie erhalten werden;
und wobei das tiefe Lernen des künstlichen neuronalen Netzwerks unter Verwendung der zweiten Zeitreihe von Bildflächen und Klassen-Labeln, die automatisch auf eine Weise erzeugt werden, dass ein eindeutiges Klassen-Label jeder zweiten Zeitreihe von Bildflächen zugeordnet ist, durchgeführt wird.

13. Informationssystem, das zum Abrufen von Informationen aus einer Datenbank oder Wissensdatenbank aus einem Abfragebild konfiguriert ist, wobei das Informationssystem eine elektronische Schaltungsanordnung umfasst, die konfiguriert ist zum:
- Abrufen eines Modells eines künstlichen neuronalen Netzwerks, das zum Erzeugen von Einbettungen und Indizieren von Bildern in Bildfeldern der Datenbank oder Wissensbasis verwendet wurde, gemäß dem Verfahren nach einem der Ansprüche 1 bis 6;
- Konfigurieren eines künstlichen neuronalen Netzwerks mit dem abgerufenen Modell;
- Extrahieren, für das Abfragebild, von Merkmalskarten mindestens einer verborgenen Schicht des künstlichen neuronalen Netzwerks und Erzeugen, aus den extrahierten Merkmalskarten, einer Einbettung für das Abfragebild;
- Suchen, in den Bildfeldern der Datenbank oder Wissensbasis, der Bilder, die dem Abfragebild ähnlich sind, durch Verwenden der Einbettung, die für das Abfragebild erzeugt wurde, und der einbettungsbasierten Indizierung gemäß dem Verfahren nach einem der Ansprüche 1 bis 6;
- Bereitstellen, als Reaktion auf das Abfragebild, der Informationen, die in der Datenbank oder Wissensdatenbank gespeichert sind und den Bildern, die dem Abfragebild ähnlich sind, zugeordnet sind.

## Revendications

1. Procédé de stockage d'informations dans une base de données ou une base de connaissances, le procédé comprenant les étapes suivantes :
- exécuter un apprentissage profond d'un réseau neuronal artificiel en utilisant des images comme ensemble de données d'entrée ;
- une fois que le réseau neuronal artificiel a été formé, entrer les images associées aux informations à stocker dans la base de données ou la base de connaissances, et extraire, pour chaque image d'entrée, des cartes de caractéristiques d'au moins une couche cachée du réseau neuronal artificiel ;
- générer, pour chaque image d'entrée, une incorporation à partir des cartes de caractéristiques extraites ;
- stocker les informations dans la base de données ou la base de connaissances en association avec leurs images respectives dans des champs d'images indexés sur la base des incorporations générées,
le procédé comprenant en outre les étapes suivantes :
- collecter des images satellites géométriquement enregistrées afin de former une première série chronologique d'images de référence ;
- générer des images par extraction aléatoire de pixels adjacents dans les images de référence afin de former une deuxième série chronologique de fragments d'images, les fragments d'images étant ainsi une partie desdites images de référence à partir desquelles ils sont obtenus ;
et où l'apprentissage profond du réseau neuronal artificiel est effectué en utilisant la deuxième série chronologique de fragments d'images et d'étiquettes de classe qui sont automatiquement générées de telle sorte qu'une étiquette de classe unique soit associée à chaque deuxième série chronologique de fragments d'images.

2. Procédé selon la revendication 1, dans lequel l'ensemble de données d'entrée utilisé pour effectuer l'apprentissage profond est complété par le traitement d'images résultant d'au moins une transformation visuelle prédéfinie des images de l'ensemble de données d'entrée.

3. Procédé selon la revendication 1 ou la revendication 2, dans lequel les incorporations sont générées à partir d'une combinaison de cartes de caractéristiques extraites qui est obtenue par regroupement maximum, regroupement moyen ou regroupement moyen généralisé.

4. Procédé selon l'une quelconque des revendications 1 à 3, dans lequel le procédé comprend :
- le sous-échantillonnage des fragments d'images et la dérivation ultérieure d'incorporations à échelles multiples en tant qu'incorporations générées.

5. Procédé selon l'une quelconque des revendications 1 à 4, dans lequel le procédé comprend les étapes suivantes :
- collecter des images de référence thématiques, qui sont des observations multiples d'une même entité dans différentes conditions de capture ;
- effectuer un apprentissage profond affiné du réseau neuronal artificiel en utilisant les images de référence thématiques.

6. Procédé selon la revendication 5, dans lequel les champs d'images sont indexés sur la base des incorporations générées en utilisant l'apprentissage profond du réseau neuronal artificiel avec la deuxième série chronologique de fragments d'images et des incorporations générées en utilisant l'apprentissage profond du réseau neuronal artificiel avec les images de référence thématiques.

7. Procédé permettant d'extraire des informations d'une base de données ou d'une base de connaissances à partir d'une image de requête, le procédé comprenant les étapes suivantes :
- extraire un modèle d'un réseau neuronal artificiel qui a été utilisé pour générer des incorporations et indexer des images dans des champs d'images de la base de données ou de la base de connaissances selon le procédé de l'une quelconque des revendications 1 à 6 ;
- configurer un réseau neuronal artificiel avec le modèle extrait ;
- extraire, pour l'image de requête, des cartes de caractéristiques d'au moins une couche cachée du réseau neuronal artificiel et générer, à partir des cartes de caractéristiques extraites, une incorporation pour l'image de requête ;
- rechercher, dans les champs d'image de la base de données ou de la base de connaissances, les images similaires à l'image de requête, en utilisant l'incorporation générée pour l'image de requête et l'indexation basée sur l'incorporation selon le procédé de l'une quelconque des revendications 1 à 6 ;
- fournir, en réponse à l'image de requête, les informations stockées dans la base de données ou la base de connaissances et associées aux images similaires à l'image de requête.

8. Procédé selon la revendication 7, dans lequel le procédé comprend les étapes suivantes :
- extraire les données associées aux images stockées dans la base de données ou la base de connaissances qui ont été trouvées, lors d'une recherche dans les champs d'images de la base de données ou de la base de connaissances, comme étant similaires à l'image de requête ;
- associer ou incorporer les données extraites dans l'image de requête.

9. Procédé selon la revendication 7 ou la revendication 8, dans lequel le procédé comprend l'étape suivante :
- afficher les informations fournies en réponse à l'image de requête ainsi que les images qui ont été trouvées, lors de la recherche dans les champs d'images de la base de données ou de la base de connaissances, comme étant similaires à l'image de requête.

10. Produit programme informatique comprenant des instructions de code de programme qui peuvent être chargées dans un dispositif programmable pour mettre en œuvre le procédé selon l'une quelconque des revendications 1 à 6 ou le procédé selon l'une quelconque des revendications 7 à 9, lorsque les instructions de code de programme sont exécutées par le dispositif programmable.

11. Support de stockage d'informations stockant des instructions qui peuvent être chargées dans un dispositif programmable pour mettre en œuvre le procédé selon l'une quelconque des revendications 1 à 6 ou le procédé selon l'une quelconque des revendications 7 à 9, lorsque les instructions sont lues à partir du support de stockage d'informations et exécutées par le dispositif programmable.

12. Système d'information configuré pour stocker des informations dans une base de données ou une base de connaissances, dans lequel le système d'information comprend des circuits électroniques configurés pour :
- exécuter un apprentissage profond d'un réseau neuronal artificiel en utilisant des images comme ensemble de données d'entrée ;
- une fois que le réseau neuronal artificiel a été formé, entrer les images associées aux informations à stocker dans la base de données ou la base de connaissances, et extraire, pour chaque image d'entrée, des cartes de caractéristiques d'au moins une couche cachée du réseau neuronal artificiel ;
- générer, pour chaque image d'entrée, une incorporation à partir des cartes de caractéristiques extraites ;
- stocker les informations dans la base de données ou la base de connaissances en association avec leurs images respectives dans des champs d'images indexés sur la base des incorporations générées,
où les circuits électroniques sont en outre configurés pour :
- collecter des images satellites géométriquement enregistrées afin de former une première série chronologique d'images de référence ;
- générer des images par extraction aléatoire de pixels adjacents dans les images de référence afin de former une deuxième série chronologique de fragments d'images, les fragments d'images étant ainsi une partie desdites images de référence à partir desquelles ils sont obtenus ;
et où l'apprentissage profond du réseau neuronal artificiel est effectué en utilisant la deuxième série chronologique de fragments d'images et d'étiquettes de classe qui sont automatiquement générées de telle sorte qu'une étiquette de classe unique soit associée à chaque deuxième série chronologique de fragments d'images.

13. Système d'information configuré pour extraire des informations d'une base de données ou d'une base de connaissances à partir d'une image de requête, le système d'information comprenant des circuits électroniques configurés pour :
- extraire un modèle d'un réseau neuronal artificiel qui a été utilisé pour générer des incorporations et indexer des images dans des champs d'images de la base de données ou de la base de connaissances selon le procédé de l'une quelconque des revendications 1 à 6 ;
- configurer un réseau neuronal artificiel avec le modèle extrait ;
- extraire, pour l'image de requête, des cartes de caractéristiques d'au moins une couche cachée du réseau neuronal artificiel et générer, à partir des cartes de caractéristiques extraites, une incorporation pour l'image de requête ;
- rechercher, dans les champs d'image de la base de données ou de la base de connaissances, les images similaires à l'image de requête, en utilisant l'incorporation générée pour l'image de requête et l'indexation basée sur l'incorporation selon le procédé de l'une quelconque des revendications 1 à 6 ;
- fournir, en réponse à l'image de requête, les informations stockées dans la base de données ou la base de connaissances et associées aux images similaires à l'image de requête.
